# EUROPÄISCHE PATENTSCHRIFT

(11) **EP 1 382 174 B1**
(45) Veröffentlichungstag und Bekanntmachung des Hinweises auf die Patenterteilung: **21.06.2006**
(21) Anmeldenummer: 02740277.5
(22) Anmeldetag: 22.04.2002
(51) Int. Cl.: H04L 29/00

(54) **VERFAHREN ZUR STEUERUNG DER FREIGABE UND ÜBERTRAGUNG ELEKTRONISCHER DATEN AUF ELEKTRONISCHEN KOMMUNIKATIONSGERÄREN**
METHOD FOR CONTROLLING THE RELEASE AND TRANSMISSION OF ELECTRONIC DATA ON ELECTRONIC COMMUNICATION DEVICES
PROCEDE DE COMMANDE DU LANCEMENT ET DE LA TRANSMISSION DE DONNEES ELECTRONIQUES SUR DES APPAREILS DE COMMUNICATION ELECTRONIQUES

(30) Priorität: 27.04.2001 DE 10120698
(43) Veröffentlichungstag der Anmeldung: 21.01.2004
(73) Patentinhaber: SIEMENS AKTIENGESELLSCHAFT, 80333 München (DE)
(72) Erfinder: ARETZ, Kurt, 46419 Isselburg (DE)
(86) Internationale Anmeldenummer: PCT/DE2002/001472
(87) Internationale Veröffentlichungsnummer: WO 2002/089439

(56) Entgegenhaltungen:
- EP-A- 0 715 247
- WO-A-00/60508
- WO-A-02/082244
- DE-A- 19 717 149

## Beschreibung

Die Erfindung betrifft ein Verfahren zur Freigabe und Übertragung elektronischer Daten auf elektronischen Kommunikationsgeräten, insbesondere mobilen Kommunikationsendgeräten.

Herkömmliche Verfahren zur Steuerung der Freigabe der Darbietung elektronischer Daten auf elektronischen Kommunikationsgeräten bestehen darin, dass die Darbietung elektronischer Daten auf derartigen Geräten von einer Nutzereingabe ausgelöst wird.

Ein derartiges Verfahren ist aus EP-A-0 715 247 bekannt.

Als elektronische Kommunikationsgeräte werden stationäre Geräte, wie beispielsweise ein PC, und mobile Geräte verstanden, wobei als mobile elektronische Kommunikationsgeräte in diesem Zusammenhang alle elektronischen Geräte bezeichnet werden, welche im weitesten Sinne portabel und mit einer Vorrichtung zur Datenübertragung ausgestattet sind (Mobiltelefone, Palmtops, oder ähnliche). Darbietung von elektronischen Daten kann visuell und/oder akustisch erfolgen. Hierzu enthalten die elektronischen Kommunikationsgeräte Darbietungsvorrichtungen, ggf. in Form von Zusatzgeräten. Darzubietende elektronische Daten liegen in Form von Datensätzen vor. Ein Datensatz enthält zu seiner Kennzeichnung neben seinem "Inhalt" ein Datensatzkennzeichen.

Der Zugriff auf einen Datensatz, d.h. die Freigabe der Darbietung des Datensatzes auf eine Nutzeranweisung hin, kann ferner von einem Freigabezeichen abhängen (vgl. Tabelle 1). Der Zugriff auf einen Datensatz D1 auf einem Gerät G1 wird in Abhängigkeit von einem Freigabezeichen gewährt oder verweigert.

Werden elektronische Daten übertragen, beispielsweise in Form von Visitenkarten, E-Mail oder File-Transfer, so werden die Daten von einem Sendegerät auf ein Empfangsgerät kopiert.

Übertragene Daten können regelmäßig prinzipiell sowohl am Gerät des Senders wie des Empfängers dargeboten werden. Es wird keine Vorkehrung dafür getroffen, dass der Zugriff auf einen Datensatz auf einem Gerät den Zugriff auf einen Datensatz auf einem anderen Gerät einschränkt oder beeinflusst und auf diese Weise verknappt. Insbesondere ist es bei dem empfängerseitig entstehenden Zugriff auf übertragene Daten ohne Einfluss, welcher Zugriff auf die übertragenen Daten senderseitig nach Abschluss der Übertragung verbleiben.

Die bei der Datenübertragung quasi inhärent erfolgende Anfertigung von Kopien und hierdurch automatisch erfolgende Datenvervielfältigung hat zur Konsequenz, dass digitale Daten nicht verknappt werden und sich zu interessanten und werthaltigen Sammelobjekten entwickeln können, die beispielsweise zwischen Privatpersonen mit ähnlichen Interessenlagen ("Sammlern") ausgetauscht werden und auch Gegenstand von gewerblichen Sammelbörsen sein könnten. Insbesondere werden deshalb beim Austausch elektronischer Daten auch keine Prozesse unterstützt, die dem Umgang mit physikalisch konkreten Sammel- oder Tauschobjekten entsprechen und gewissen Spielregeln unterworfen werden können.

Aufgabe der vorliegenden Erfindung ist es, die genannte Nachteile zu überwinden und ein Verfahren zur Steuerung der Freigabe der Darbietung elektronischer Daten auf elektronischen Kommunikationsgeräten, insbesondere mobilen elektronischen Kommunikationsendgeräten, nach dem Oberbegriff des Anspruchs 1 bereitzustellen.

Die Lösung der Aufgabe erfolgt durch die Merkmale des Verfahrens nach Anspruch 1. Bevorzugte Ausgestaltungen der Erfindung sind Gegenstand der Unteransprüche.

In dem erfindungsgemäßen Verfahren zur Steuerung der Freigabe der Darbietung elektronischer Daten auf elektronischen Kommunikationsgeräten liegen die elektronischen Daten in Form von jeweils mit Datensatzkennzeichen gekennzeichneten Datensätzen vor und die Freigabe der Darbietung eines elektronischen Datensatzes auf einem elektronischen Kommunikationsgerät erfolgt in Abhängigkeit von einem Freigabezeichen, wobei eine Veränderung eines ersten Freigabezeichens betreffend die Darbietung eines ersten elektronischen Datensatzes abhängig ist von einem zweiten Freigabezeichen betreffend die Darbietung eines zweiten elektronischen Datensatzes.

Vorzugsweise wird das erfindungsgemäße Verfahren in mobilen Kommunikationsgeräten eingesetzt.

In einer vorteilhaften Weiterbildung erfolgt die Freigabe der Darbietung elektronischer Daten auf elektronischen Kommunikationsgeräten durch Modellierung auf Basis von Freigabezeichen nach einem Satz von Regeln, die dem gewohnten Umgang mit physikalisch konkreten Sammel- oder Tauschobjekten oder dem Verhalten von natürlichen Populationen entsprechen.

So zeigt Tabelle 1 die Modellierung eines Zugriffs auf einen Datensatz D1. Ist das Freigabezeichen gesetzt (Ja), so hat das Gerät G1 Zugriff auf den Datensatz D1. Ist dagegen das Freigabezeichen nicht gesetzt (Nein), so wird der Zugriff des Geräts G1 auf den Datensatz D1 verweigert.

In Tabelle 2 ist dargestellt, wie beispielsweise die Übergabe eines Datensatzes D1 von einem Gerät G1 auf ein Gerät G2 modelliert werden kann: Vor der Übergabe besteht auf G1 ein Zugriff auf D1, nicht aber auf G2, nach Übergabe ist es umgekehrt. Die Veränderung der Freigabezeichen auf G2 und G1 erfolgen gegenläufig.

In Tabelle 3 ist dargestellt, wie durch die Kombination zweier Übergabevorgänge ein Tausch zwischen einem Datensatz D1 auf Gerät G1 und einem Datensatz D2 auf einem Gerät G2 modelliert werden kann: Vor dem Tausch besteht auf G1 ein Zugriff auf D1, nicht aber auf D2, und auf G2 ein Zugriff auf D2, nicht aber auf D1. Nach dem Tausch ist es umgekehrt. Die Veränderung der Freigabezeichen auf G2 und G1 erfolgen auch hier gegenläufig.

In einer anderen Weiterbildung kann - analog zu Vorgängen bei natürlichen Populationen - eine "Mutation" eines Datensatzes D1 in einem Datensatz D2 auf dem gleichen Gerät dadurch modelliert werden, dass das Freigabezeichen von D1 von zuvor Ja auf danach Nein verändert wird und das Freigabezeichen von D2 gegenläufig verändert wird.

In einer anderen Weiterbildung kann eine "Ausbreitung" eines Datensatzes D1 von einem Gerät G1 auf ein Gerät G2 dadurch modelliert werden, dass das Freigabezeichen von D1 auf G2 an das Freigabezeichen von D1 auf G1 angeglichen wird. Hierdurch können sowohl Zugriff als auch Nichtzugriff sich von G1 auf G2 ausbreiten.

In einer Weiterbildung davon kann eine "Paarung" dadurch modelliert werden, dass bei Zugriff auf zwei Datensätze ("Eltern") ein Zugriff auf einen dritten Datensatz ("Kind") freigegeben wird.

In einer anderen Weiterbildung kann eine "Ansteckung" eines Datensatzes D1 auf einem Gerät G1 an einen Datensatz D2 dadurch modelliert werden, dass das Freigabezeichen von D1 auf G1 an das Freigabezeichen von D2 auf G1 angeglichen wird.

In einer anderen Weiterbildung können "Geburt" bzw. "Tod" eines Datensatzes D1 durch eine "Zeitsteuerung" dadurch modelliert werden, dass das Freigabezeichen von D1 in Abhängigkeit von einem Steuersignal, das in Abhängigkeit von einer Zeitmessung ausgelöst wird, auf Zugriff bzw. Nichtzugriff geschaltet wird.

In einer anderen Weiterbildung können zufällige Änderungen des Zugriffs auf einen Datensatz D1 auf einem Gerät G1 modelliert werden, indem das Freigabezeichen von D1 auf G1 in Abhängigkeit von einem (Pseudo-)Zufallsalgorithmus erfolgt.

In einer anderen Weiterbildung kann eine Auswahl aus den vorstehenden Regeln kombiniert verwendet werden.

In einer anderen Weiterbildung werden die Freigabezeichen durch eine Parametermenge, beispielsweise ganze, nichtnegative Zahlen modelliert. Zugriff auf einen Datensatz, d.h. Freigabe der Darbietung auf eine Nutzereingabe hin, erfolgt in Abhängigkeit davon, ob das Freigabezeichen des Datensatzes in eine vorgegebene Parameter-Teilmenge, beispielsweise die Menge {0}, fällt. Auf diese Weise kann eine Population mit mehrfach vorhandenen Datensätzen modelliert werden. Modellierung von "Geburt", "Tod", "Übergabe" und "Tausch" zeigen die Tabellen 4a, 4b, 5 und 6.

In einer anderen Weiterbildung werden die zulässigen Freigabezeichen durch Binärzeichen, z.B. 1 = Zugriff, 0 = kein Zugriff, modelliert.

In einer anderen Weiterbildung werden die Informationen über Freigabezeichen auch auf einem Server gespeichert. Auf diese Weise ist es einem Nutzer des Servers möglich, als Veranstalter von Spielen aufzutreten und beispielsweise Teilnahmegebühren von den Nutzern der elektronischen Kommunikationsgeräte zu erheben.

In einer Weiterbildung hiervon können die Freigabezeichen auf elektronischen Kommunikationsgerätes auch von dem Server aus beeinflusst werden. Hierdurch können weitere Spielregeln implementiert werden.

In einer anderen Weiterbildung erfolgt die Datenkommunikation zwischen den elektronischen Kommunikationsgeräten, insbesondere der mobilen Kommunikationsgeräte, auf Basis beispielsweise eines der Standards IrDA, HomeRF, IEEE 802.1 oder Bluetooth.

Vorzugsweise beinhalten die darzubietenden Datensätze im wesentlichen Bilder und/oder Sound Tracks und/oder Videoclips.

**Tabelle 1: Modellierung von "Zugriff"**

| Datensatz (repräsentiert durch Datensatzkennzeichen) | Gerät | Freigabezeichen (Ja/Nein) |
|---|---|---|
| Zugriff: | | |
| D1 | G1 | Ja |
| Darbietung der Daten des Datensatzes D1 auf dem Gerät G1 nach auslösender Nutzereingabe | | |
| Kein Zugriff: | | |
| D1 | G1 | Nein |
| Verweigerung der Darbietung der Daten des Datensatzes D1 auf dem Gerät G1 nach auslösender Nutzereingabe | | |

**Tabelle 2: Modellierung von "Übergabe"**

| Datensatz (repräsentiert durch Datensatzkennzeichen) | Gerät (repräsentiert durch Gerätekennzeichen) | Freigabezeichen (Ja/Nein) |
|---|---|---|
| Zustand vorher | | |
| D1 | G1 | Ja |
| D1 | G2 | Nein |
| Zustand nachher | | |
| D1 | G1 | Nein |
| D1 | G2 | Ja |

**Tabelle 3: Modellierung von "Tausch"**

| Datensatz (repräsentiert durch Datensatzkennzeichen) | Gerät (repräsentiert durch Gerätekennzeichen) | Freigabezeichen (Ja/Nein) |
|---|---|---|
| Zustand vorher | | |
| D1 | G1 | Ja |
| D1 | G2 | Nein |
| D2 | G1 | Nein |
| D2 | G2 | Ja |
| Zustand nachher | | |
| D1 | G1 | Nein |
| D1 | G2 | Ja |
| D2 | G1 | Ja |
| D2 | G2 | Nein |

**Tabelle 4a: Modellierung von "Geburt"**

| Datensatz (repräsentiert durch Datensatzkennzeichen) | Gerät (repräsentiert durch Gerätekennzeichen) | Freigabezeichen (ganze, nichtnegative Zahl) |
|---|---|---|
| Zustand vorher | | |
| D1 | G1 | N |

| Zustand nachher | | |
|---|---|---|
| D1 | G1 | N+1 |

**Tabelle 4b: Modellierung von "Tod"**

| Datensatz (repräsentiert durch Datensatzkennzeichen) | Gerät (repräsentiert durch Gerätekennzeichen) | Freigabezeichen (ganze, nichtnegative Zahl) | |
|---|---|---|---|
| Zustand vorher | | | |
| D1 | G1 | N | (N>0) |

| Zustand nachher | | | |
|---|---|---|---|
| D1 | G1 | N-1 | |

**Tabelle 5: Modellierung von "Übergabe"**

| Datensatz (repräsentiert durch Datensatzkennzeichen) | Gerät (repräsentiert durch Gerätekennzeichen) | Freigabezeichen (ganze, nichtnegative Zahl) | |
|---|---|---|---|
| Zustand vorher | | | |
| D1 | G1 | N | (N>0) |
| D1 | G2 | M | |

| Zustand nachher | | | |
|---|---|---|---|
| D1 | G1 | N+1 | |
| D1 | G2 | M-1 | |

**Tabelle 6: Modellierung von "Tausch"**

| Datensatz (repräsentiert durch Datensatzkennzeichen) | Gerät (repräsentiert durch Gerätekennzeichen) | Freigabezeichen (ganze, nichtnegative Zahl) | |
|---|---|---|---|
| Zustand vorher | | | |
| D1 | G1 | N1 | (N1>0) |
| D1 | G2 | N2 | |
| D2 | G1 | M1 | |
| D2 | G2 | M2 | (M2>0) |

| Zustand nachher | | | |
|---|---|---|---|
| D1 | G1 | N1-1 | |
| D1 | G2 | N2+1 | |
| D2 | G1 | M1+1 | |
| D2 | G2 | M2-1 | |

## Patentansprüche

1. Verfahren zur Steuerung der Freigabe der Darbietung elektronischer Daten auf elektronischen Kommunikationsgeräten, wobei die elektronischen Daten in Form von jeweils mit Datensatzkennzeichen gekennzeichneten Datensätzen vorliegen, und die Freigabe der Darbietung eines elektronischen Datensatzes auf einem elektronischen Kommunikationsgerät in Abhängigkeit von einem Freigabezeichen erfolgt, **dadurch gekennzeichnet, dass** eine Veränderung eines ersten Freigabezeichens betreffend die Darbietung eines ersten elektronischen Datensatzes abhängig ist von einem zweiten Freigabezeichen betreffend die Darbietung eines zweiten elektronischen Datensatzes.

2. Verfahren nach Anspruch 1, **dadurch gekennzeichnet, dass** die Veränderung der Freigabezeichen zusätzlich abhängig ist von einem Steuersignal, das in Abhängigkeit von einer Zeitmessung ausgelöst wird, oder von einem Pseudo-Zufallsalgorithmus.

3. Verfahren nach Anspruch 1 oder 2, **dadurch gekennzeichnet, dass** die Veränderung von Freigabezeichen einer Auswahl der folgenden Regeln unterliegt:
Übergaberegel:
Nach einer auslösenden Nutzereingabe Veränderung eines Freigabezeichens eines mit einem ersten Datensatzkennzeichen gekennzeichneten elektronischen Datensatzes auf einem ersten Kommunikationsgerät und gegenläufige Veränderung eines Freigabezeichens eines mit dem ersten Datensatzkennzeichen gekennzeichneten Datensatzes auf einem zweiten Kommunikationsgerät;
Mutationsregel:
Nach einer auslösenden Nutzereingabe Veränderung eines Freigabezeichens eines mit einem ersten Datensatzkennzeichen gekennzeichneten elektronischen Datensatzes auf einem ersten Kommunikationsgerät und gegenläufige Veränderung eines Freigabezeichens eines mit einem zweiten Datensatzkennzeichen gekennzeichneten Datensatzes;
Ausbreitungsregel:
Angleichung eines Freigabezeichens eines mit einem ersten Datensatzkennzeichen gekennzeichneten elektronischen Datensatzes auf einem ersten Kommunikationsgerät an das Freigabezeichen eines mit dem ersten Datensatzkennzeichen gekennzeichneten Datensatzes auf einem zweiten Kommunikationsgerät;
Ansteckungsregel:
Angleichung eines Freigabezeichens eines mit einem ersten Datensatzkennzeichen gekennzeichneten elektronischen Datensatzes auf einem ersten Kommunikationsgerät an das Freigabezeichen eines mit einem zweiten Datensatzkennzeichen gekennzeichneten Datensatzes.

4. Verfahren nach einem der vorstehenden Ansprüche, **dadurch gekennzeichnet , dass** die zulässigen Freigabezeichen durch eine Parametermenge repräsentiert werden, wobei die Freigabe der Darbietung eines elektronischen Datensatzes auf einem elektronischen Kommunikationsgerät in Abhängigkeit davon erfolgt, ob das Freigabezeichen in eine vorgegebene Parameter-Teilmenge fällt.

5. Verfahren nach Anspruch 4, **dadurch gekennzeichnet, dass** die zulässigen Freigabezeichen durch die Binärzeichen 0 und 1 repräsentiert werden, wobei die Freigabe der Darbietung eines elektronischen Datensatzes auf einem elektronischen Kommunikationsgerät erfolgt, wenn das Freigabezeichen den Wert 1 annimmt, und andernfalls verweigert wird.

6. Verfahren nach einem der vorstehenden Ansprüche, **dadurch gekennzeichnet, dass** eine Information über den Zustand von Freigabezeichen auf einem elektronischen Kommunikationsgerät in einem Server gespeichert wird.

7. Verfahren nach Anspruch 6, **dadurch gekennzeichnet, dass** die Freigabe von Darbietungen von elektronischen Daten oder der Zustand von Freigabezeichen auf einem elektronischen Kommunikationsgerät von dem Server durch Kommunikation mit dem Kommunikationsgerät beeinflusst wird.

8. Verfahren nach einem der vorstehenden Ansprüche, **dadurch gekennzeichnet, dass** die Datenkommunikation zwischen elektronischen Kommunikationsgeräten auf Basis eines der Standards IrDA, HomeRF, IEEE 802.11 oder Bluetooth erfolgt.

9. Verfahren nach einem der vorstehenden Ansprüche, **dadurch gekennzeichnet, dass** die Datensätze Bilder, Sound Tracks und/oder Videoclips beinhalten.

10. Verfahren nach einem der vorangegangenen Ansprüche, **dadurch gekennzeichnet, dass** die elektronischen Kommunikationsgeräte durch mobile elektronische Kommunikationsgeräte gebildet werden.

## Claims

1. Method for control of the opening of the presentation of electronic data on electronic communication devices, with the electronic data being present in the form of data records each identified by a record identifier, and the opening of the presentation of an electronic data record on an electronic communication device depending on an opening code, **characterized in that** a change of a first opening code relating to the presentation of a first electronic data record is dependent on a second opening code relating to the presentation of a second electronic data record.

2. Method according to claim 1, **characterized in that** the change of opening codes is additionally dependent on a control signal, which is triggered as a function of a time measurement, or of a dummy random algorithm.

3. Method according to claim 1 or 2, **characterized in that** the change of opening codes is subject to a selection of the following rules:
Transfer rule:
After an initiating user input, change of an opening code of an electronic data record identified by a first data record identifier on a first communication device and converse change of an opening code of a first data record identified by a record identifier on a second communication device
Mutation rule:
After an initiating user input, change of an opening code of an electronic data record identified by a first data record identifier on a first communication device and converse change of an opening code of a data record identified by a second record identifier;
Propagation rule:
Synchronization of an opening code of an electronic data record identified by a first data record identifier on a first communication device with the opening code of a data record identified by the first data record identifier on a second communication device
Pinning on rule:
Synchronization of an opening code of an electronic data record identified by a first data record identifier on a first communication device with the opening code of a data record identified by a second data record identifier

4. Method according to one of the preceding claims, **characterized in that**, the permitted opening code can be represented by a set of parameters, whereby the opening of the presentation of an electronic data record on an electronic communication device depends on whether the opening code falls within a specified subset of parameters.

5. Method according to claim 4, **characterized in that** the permitted opening code can be represented by the binary characters 0 and 1, whereby the presentation of an electronic data record on an electronic communication device is opened when the opening code assumes the value 1 and is refused otherwise.

6. Method according to one of the preceding claims, **characterized in that** information about the status of opening codes on an electronic communication device is also stored on a server.

7. Method according to claim 6, **characterized in that** the opening of presentations of electronic data or the status of the opening codes on an electronic communication device can also be influenced by the server by means of communication with the communication device.

8. Method according to one of the preceding claims, **characterized in that** data communication between electronic communication devices is based on one of the standards IrDA, HomeRF, IEEE 802.11 or Bluetooth.

9. Method according to one of the preceding claims, **characterized in that** the data records essentially contain pictures and/or soundtracks and/or video clips.

10. Method according to one of the preceding claims, **characterized in that** the electronic communication devices are formed by mobile electronic communication devices.

## Revendications

1. Procédé pour la commande de l'autorisation de la présentation de données électroniques sur des appareils de communication électroniques, les données électroniques se présentant sous la forme de jeux de données caractérisés respectivement avec des caractéristiques de jeu de données, et l'autorisation de la présentation d'un jeu de données électroniques sur un appareil de communication électronique s'effectuant en fonction d'un signe d'autorisation, **caractérisé en ce qu'**une modification d'un premier signe d'autorisation concernant la présentation d'un premier jeu de données électroniques dépend d'un second signe d'autorisation concernant la présentation d'un second jeu de données électroniques.

2. Procédé selon la revendication 1, **caractérisé en ce que** la modification des signes d'autorisation est dépendante en supplément d'un signal de commande qui est déclenché en fonction d'une mesure de temps, ou d'un algorithme pseudo aléatoire.

3. Procédé selon la revendication 1 ou 2, **caractérisé en ce que** la modification de signes d'autorisation est soumise à un choix des règles suivantes :
Règle de transfert .
Après une entrée d'utilisateur de déclenchement modification d'un signe d'autorisation d'un jeu de données électroniques caractérisé avec une première caractéristique de jeu de données sur un premier appareil de communication et modification contraire d'un signe d'autorisation d'un jeu de données caractérisé avec la première caractéristique de jeu de données sur un second appareil de communication ;
Règle de mutation :
Après une entrée d'utilisateur de déclenchement modification d'un signe d'autorisation d'un jeu de données électroniques caractérisé avec une première caractéristique de jeu de données sur un premier appareil de communication et modification contraire d'un signe d'autorisation d'un jeu de données caractérisé avec une seconde caractéristique de jeu de données ;
Règle d'élargissement :
Alignement d'un signe d'autorisation d'un jeu de données électroniques caractérisé avec une première caractéristique de jeu de données sur un premier appareil de communication sur le signe d'autorisation d'un jeu de données caractérisé avec la première caractéristique de jeu de données sur un second appareil de communication ;
Règle de contagion :
Alignement d'un signe d'autorisation d'un jeu de données électroniques caractérisé avec une première caractéristique de jeu de données sur un premier appareil de communication sur le signe d'autorisation d'un jeu de données caractérisé avec une seconde caractéristique de jeu de données.

4. Procédé selon l'une quelconque des revendications précédentes, **caractérisé en ce que** les signes d'autorisation admissibles sont représentés par un ensemble de paramètres, l'autorisation de la présentation d'un jeu de données électroniques sur un appareil de communication électronique s'effectuant en fonction du fait que le signe d'autorisation fait partie d'un sous-ensemble de paramètres prédéfinie.

5. Procédé selon la revendication 4, **caractérisé en ce que** les signes d'autorisation admissibles sont représentés par les signes binaires 0 et 1, l'autorisation de la présentation d'un jeu de données électroniques sur un appareil de communication électronique s'effectuant lorsque le signe d'autorisation prend la valeur 1, et étant refusé autrement.

6. Procédé selon l'une quelconque des revendications précédentes, **caractérisé en ce qu'**une information sur l'état de signes d'autorisation sur un appareil de communication électronique est mémorisé dans un serveur.

7. Procédé selon la revendication 6, **caractérisé en ce que** l'autorisation de présentations de données électroniques ou l'état de signes d'autorisation sur un appareil de communication électronique est influencée par le serveur par communication avec l'appareil de communication.

8. Procédé selon l'une quelconque des revendications précédentes, **caractérisé en ce que** la communication de données entre des appareils de communication électroniques s'effectue sur la base de l'un des standards IrDA, HomeRF, IEEE 802.11 ou Bluetooth.

9. Procédé selon l'une quelconque des revendications précédentes, **caractérisé en ce que** les jeux de données contiennent des images, des pistes sonores et/ou des vidéoclips.

10. Procédé selon l'une quelconque des revendications précédentes, **caractérisé en ce que** les appareils de communication électroniques sont formés par des appareils de communication électroniques mobiles.
